# EUROPÄISCHE PATENTSCHRIFT

(11) **EP 1 002 961 B1**
(45) Veröffentlichungstag und Bekanntmachung des Hinweises auf die Patenterteilung: **14.01.2004**
(21) Anmeldenummer: 99122530.1
(22) Anmeldetag: 12.11.1999
(51) Int. Cl.: F15B 13/00, F15B 21/08, G11C 7/10

(54) **Verfahren zur Ansteuerung von elektrisch betätigten Schaltventilen**
Process for controlling electrically-operated switching valves
Procédé pour la commande de soupapes de commutation à actionnement électrique

(30) Priorität: 21.11.1998 DE 19853739
(43) Veröffentlichungstag der Anmeldung: 24.05.2000
(73) Patentinhaber: Bosch Rexroth AG, 97816 Lohr am Main (DE)
(72) Erfinder: Keller, Dieter, 97209 Veitshöchheim (DE); Stitz, Matthias, 97816 Lohr/Main (DE)

(56) Entgegenhaltungen:
- WO-A-96/19027
- DE-A- 19 647 215
- DE-C- 19 606 673

## Beschreibung

Die Erfindung betrifft ein Verfahren zur Ansteuerung von einen Fluidstrom steuernden, elektrisch betätigten Schaltventilen über ein digitales Bussystem, bei dem in einem Datentelegramm mehr Nutzdatenbits übertragen werden als für den Schaltvorgang des Schaltventils als solchen erforderlich sind.

Anstelle einer parallelen Verdrahtung von Aktuatoren, wie z. B. elektrisch betätigten Schaltventilen, werden zunehmend digitale Bussysteme verwendet, bei denen mehrere Aktuatoren als Teilnehmer an einen gemeinsamen Datenbus angeschlossen sind. Erfolgt die Datenübertragung auf dem Datenbus in serieller Darstellung, können als Datenbus elektrische Zwei-Draht-Leitungen oder Lichtwellenleiter verwendet werden. Ein Busprotokoll legt fest, in welcher Form die Adreßdaten der Teilnehmer und die an die entsprechenden Teilnehmer zu übertragenden Nutzdaten in einem Datentelegramm aufeinanderfolgen. Die Teilnehmer sind über Schnittstellen an den Datenbus angeschlossen.

Für die Ansteuerung von elektrisch betätigten Schaltventilen zur Steuerung eines Fluidstroms wird in zunehmenden Maße ein als AS-Interface bezeichnetes Bussystem mit standardisierten Schnittstellen eingesetzt. Einzelheiten dieses Bussystems sind in dem von R. Kriesel und Otto W. Madelung herausgegebenen Buch "ASI - The Actuator-Sensor-Interface for Automation", Carl Hanser Verlag München Wien, 1995 (ISBN 3-446-18265-9), beschrieben. Auf den Seiten 24 bis 28 sind die grundlegenden Gedanken des Bussystems angegeben. In einem Datentelegramm des AS-Interface-Bussystems folgen auf eine Reihe von Bits, die den Beginn eines Datentelegramms kennzeichnen, fünf Adreßbits und vier Nutzdatenbits. Den Abschluß des Datentelegramms bilden weitere Bits, die das Ende des Datentelegramms kennzeichnen. Die fünf Adreßbits ermöglichen es theoretisch, in einem Bussystem bis zu 32 Teilnehmer in beliebiger Reihenfolge nacheinander anzusprechen. In der Praxis ist das Bussystem jedoch auf 31 Teilnehmer begrenzt. In den Schnittstellen zwischen dem Bus und den einzelnen Teilnehmern werden die vier dem jeweiligen Teilnehmer zugeordneten Nutzdatenbits mindestens für die Dauer eines Buszyklusses gespeichert. Die Anzahl der in einem Datentelegramm übertragenen Nutzdatenbits ist ein Maß für die Informationsbreite des Bussystems. Für den Schaltvorgang eines elektromagnetisch betätigten Schaltventils mit einer Magnetspule ist nur ein Nutzdatenbit erforderlich. Hat dieses Nutzdatenbit den Wert "0", fließt kein Strom über die Magnetspule, hat das Nutzdatenbit den Wert "1", fließt Strom über die Magnetspule. Bei einem Schaltventil mit zwei Magnetspulen, die den Steuerkolben des Schaltventils aus einer Ruhestellung in zwei einander entgegengesetzte Arbeitsstellungen schalten, sind dementsprechend ein Nutzdatenbit für den Schaltvorgang in die eine Richtung und ein Nutzdatenbit für den Schaltvorgang in die andere Richtung notwendig. In diesem Fall werden nur zwei der vier zur Verfügung stehenden Nutzdatenbits verwendet, also nicht die volle Informationsbreite des Bussystems von vier Nutzdatenbits ausgenutzt.

Eine Möglichkeit, die volle Informationsbreite des Bussystems auszunutzen, besteht darin, an eine Schnittstelle nicht nur ein Schaltventil sondern zwei Schaltventile mit je zwei Magnetspulen anzuschließen. In diesem Fall besitzen zwei räumlich getrennte Aktuatoren eine gemeinsame Schnittstelle zum Bus. Eine derartige Lösung, die zum Beispiel aus der Druckschrift WO 96/19027 bekannt ist, nutzt zwar die volle Informationsbreite des Bussystems aus, hat aber den Nachteil, daß von der Schnittstelle zu den beiden Aktuatoren eine parallele Verdrahtung erforderlich ist, die durch die Verwendung eines Bussystems vermieden werden soll.

Bei Schaltventilen ist es vorteilhaft, die Schnittstelle zwischen Bus und Schaltventil räumlich in das Schaltventil zu integrieren. In diesem Fall wird der Datenbus direkt an das Schaltventil angeschlossen. Durch diese Maßnahme entfällt eine parallele Verdrahtung zwischen einer von dem Schaltventil räumlich getrennten Schnittstelle und dem Schaltventil. Damit ist jedem Schaltventil eine eigene Schnittstelle zugeordnet. Da an jede Schnittstelle nur ein Schaltventil angeschlossen ist, für dessen Betätigung im Fall von zwei Magnetspulen zwei Nutzdatenbits benötigt werden, wird aber jeweils nur ein Teilbereich der vollen Informationsbreite des Bussystems von vier Nutzdatenbits ausgenutzt.

Der Erfindung liegt die Aufgabe zugrunde, die Funktionalität eines Verfahren der eingangs genannten Art zu verbessern. Diese Aufgabe wird durch die im Anspruch 1 gekennzeichneten Merkmale gelöst. Die Erfindung verwendet die ohnehin vorhandene Informationsbreite des Bussystems, um die Funktionalität zu verbessern.

Vorteilhafte Weiterbildungen der Erfindung sind in den Unteransprüchen gekennzeichnet. Die Umschaltung des über die Magnetspule fließenden Stroms zwischen zwei Werten, erlaubt es, den über die Magnetspule eines elektromagnetisch betätigten Schaltventils fließenden Strom nach dem Durchschalten des Magnetankers auf den Haltestrom zu verringern. Dies geschieht besonders vorteilhaft durch eine Pulsweitenmodulation, bei der das Tastverhältnis nach dem Durchschalten des Magnetankers derart im Sinne einer Verringerung geändert wird, daß der zeitliche Mittelwert des über die Magnetspule fließenden Stroms mindestens gleich dem Haltestrom ist. Es ist vorteilhaft, bis zum Durchschalten des Magnetankers Dauerstrom, entsprechend einem Tastverhältnis von 100 %, mindestens in Höhe des Anzugsstroms über die Magnetspule fließen zu lassen und danach das Tastverhältnis entsprechend dem erforderlichen Haltestrom zu verringern. Für die Verringerung des über die Magnetspule fließenden Stroms kann ein Pulsweitenmodulator mit fest eingestelltem Tastverhältnis vorgesehen werden. Es ist auch möglich, den Stromfluß über die Magnetspule in Abhängigkeit von einem Vergleich des über die Magnetspule fließenden Stroms mit einem Referenzwert, der ein Maß für den Haltestrom ist, zu steuern. In diesem Fall stellt sich das Tastverhältnis selbsttätig so ein, daß der zeitliche Mittelwert des über die Magnetspule fließenden Stroms gleich dem Referenzwert ist. Da nach dem Durchschalten des Magnetankers nur noch der gegenüber dem Anzugsstrom geringere Haltestrom fließt, verringert sich die Strombelastung der elektrischen Leitung, über die die Magnetspulen mit Strom versorgt werden.

Die Erfindung wird im folgenden anhand von in den Zeichnungen dargestellten Ausführungsbeispielen einer Vorrichtung zur Ansteuerung von elektromagnetisch betätigten Schaltventilen erläutert. Es zeigt
- Figur 1: die schematische Darstellung einer ersten Ansteuerschaltung für eines von mehreren an ein digitales Bussystem angeschlossenen elektromagnetisch betätigten Schaltventilen zur Steuerung von Fluidströmen und
- Figur 2: die schematische Darstellung einer zweiten Ansteuerschaltung für eines von mehreren an ein digitales Bussystem angeschlossenen elektromagnetisch betätigten Schaltventilen zur Steuerung von Fluidströmen.

Gleiche Bauteile sind mit den gleichen Bezugszeichen versehen.

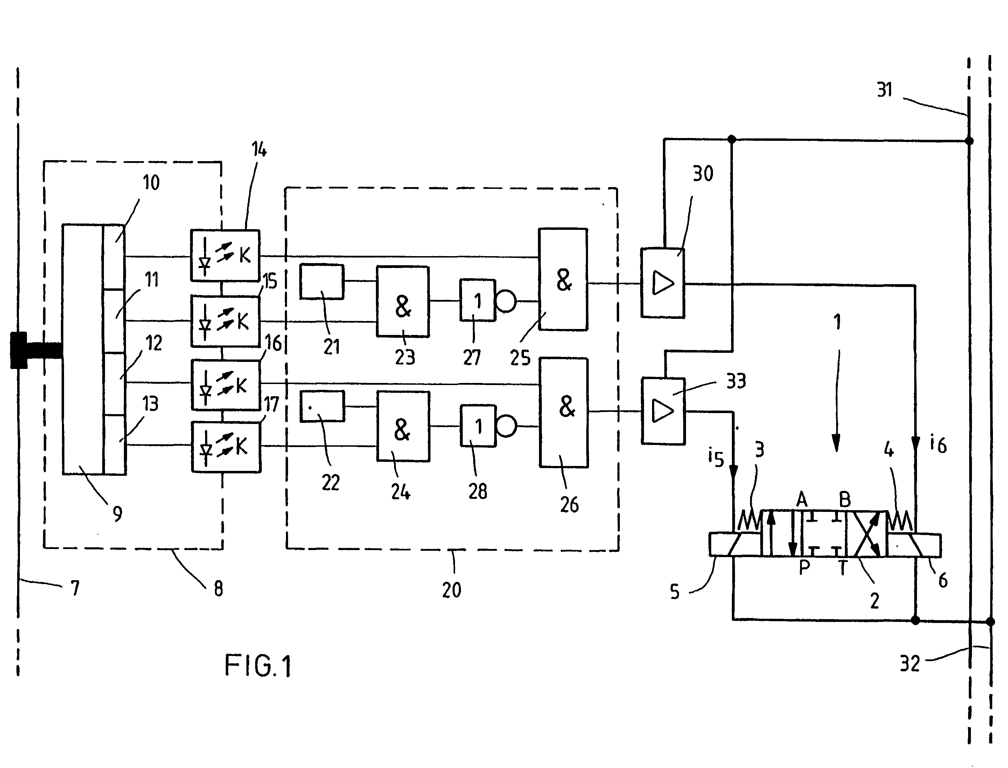

Die Figur 1 zeigt eine Ansteuerschaltung für ein elektromagnetisch betätigtes Schaltventil 1. Das schematisch dargestellte Schaltventil 1 steuert den Fluß eines hydraulischen Druckmittels. Das Schaltventil 1 ist mit vier Nutzanschlüssen P, A, B und T versehen. In üblicher Weise ist der Pumpenanschluß mit P bezeichnet und der Tankanschluß mit T. Die Anschlüsse für einen hydraulischen Verbraucher sind mit A und B bezeichnet. Mit dem Bezugszeichen 2 ist der nur symbolisch dargestellte Steuerkolben des Schaltventils 1 bezeichnet. Er ist durch zwei Federn 3 und 4 in seiner Mittelstellung gehalten. Diese Stellung ist die Ruhestellung des Schaltventils 1, in ihr sind die Anschlüsse P, A, B und T gesperrt. Mit den Bezugszeichen 5 und 6 sind zwei Magnetspulen bezeichnet. Die in der Zeichnung nicht dargestellten Anker der Magnetspulen 5 und 6 stehen mit dem Steuerkolben 2 in Wirkverbindung. Fließt über die Magnetspule 5 Strom, wird der Steuerkolben 2 in die erste von zwei Arbeitsstellungen ausgelenkt. In dieser Arbeitsstellung fließt Druckmittel von dem Anschluß P zum Anschluß A sowie vom Anschluß B zum Anschluß T. Fließt Strom über die Magnetspule 6, wird der Steuerkolben 2 in die andere Arbeitsstellung ausgelenkt. In dieser Arbeitsstellung fließt Druckmittel von dem Anschluß P zum Anschluß B sowie vom Anschluß A zum Anschluß T.

Die Ansteuerung des Schaltventils 1 erfolgt über ein als AS-Interface bezeichnetes Bussystem mit standardisierten Schnittstellen. An einen digitalen Datenbus 7 mit serieller Datenübertragung ist in dem in der Zeichnung dargestellten Ausführungsbeispiel ein Teilnehmer in Form einer Signalverarbeitungsschaltung 8 angeschlossen. Die Signalverarbeitungsschaltung 8 enthält eine Ankopplungsschaltung 9 sowie vier Speicherzellen 10, 11, 12, 13 und vier diesen nachgeschaltete Optokoppler 14, 15, 16, 17. Die Ankopplungsschaltung 9 bildet die Schnittstelle zum Datenbus 7. Die Optokoppler 14, 15, 16, 17 sorgen für eine galvanische Trennung zwischen der Signalverarbeitungsschaltung 8 und einer dieser nachgeschalteten Verknüpfungsschaltung 20. Auf dem Datenbus 7 werden Datentelegramme mit serieller Bitfolge übertragen, die fünf Adreßbits für die Adresse eines Teilnehmers und vier für den angesprochenen Teilnehmer bestimmte Nutzdatenbits enthalten. Zusätzlich zu den Adreßbits und den Nutzdatenbits enthält ein Datentelegramm weitere Bits, die den Beginn und das Ende eine Datentelegramms kennzeichnen. Die Ankopplungsschaltung 9 wertet die Datentelegramme aus, die auf dem Datenbus 7 übertragen werden. Stimmen die Adreßdaten des Datentelegramms mit der Adresse der Signalverarbeitungsschaltung 8 überein, werden die vier in dem Datentelegramm enthaltenen Nutzdatenbits in den Speicherzellen 10, 11, 12 und 13 gespeichert. Für die Dauer eines Buszyklusses stehen die Nutzdatenbits in paralleler Form für die weitere Verarbeitung zur Verfügung. In den Speicherzellen 10 bis 13 sind binäre Daten gespeichert, die jeweils nur den Wert "0" oder den Wert "1" annehmen können.

Die Verknüpfungsschaltung 20 verknüpft die Ausgangssignale der Optokoppler 14 bis 17 zu Ansteuersignalen für die Magnetspulen 5 und 6 des Schaltventils 1. Die Verknüpfungsschaltung 20 enthält zwei Pulsweitenmodulatoren 21 und 22, vier UND-Glieder 23, 24, 25, 26 sowie zwei NICHT-Glieder 27 und 28. Der Ausgang des Optokopplers 14 ist direkt mit dem einem Eingang des UND-Glieds 25 verbunden. Der andere Eingang des UND-Glieds 25 ist über das NICHT-Glied 27 mit dem Ausgang des UND-Glieds 23 verbunden. Den Eingängen des UND-Glieds 23 sind das Ausgangssignal des Optokopplers 15 und das Ausgangssignal des Pulsweitenmodulators 21 zugeführt. In entsprechender Weise ist der Ausgang des Optokopplers 16 direkt mit dem einem Eingang des UND-Glieds 26 verbunden. Der andere Eingang des UND-Glieds 26 ist über das NICHT-Glied 28 mit dem Ausgang des UND-Glieds 24 verbunden. Den Eingängen des UND-Glieds 24 sind das Ausgangssignal des Optokopplers 17 und das Ausgangssignal des Pulsweitenmodulators 22 zugeführt.

Das Ausgangssignal des UND-Glieds 25 ist dem Steuereingang eines ersten Schaltverstärkers 30 zugeführt. Ist das Ausgangssignal des UND-Glieds 25 gleich "1", fließt ein elektrischer Strom von einer ersten elektrischen Leitung 31 (mit einer Spannung von beispielsweise +24 V) über den Schaltverstärker 30 und die Magnetspule 6 zu einer zweiten elektrischen Leitung 32, die mit Massepotential verbunden ist. Der über die Magnetspule 6 fließende Strom ist mit i₆ bezeichnet. Ist das Ausgangssignal des UND-Glieds 25 gleich "0", ist der

Das Ausgangssignal des UND-Glieds 26 ist dem Steuereingang eines zweiten Schaltverstärkers 33 zugeführt. Ist das Ausgangssignal des UND-Glieds 26 gleich "1", fließt ein elektrischer Strom von der elektrischen Leitung 31 über den Schaltverstärker 33 und die Magnetspule 5 zu der mit Massepotential verbundenen elektrischen Leitung 32. Der über die Magnetspule 5 fließende Strom ist mit i₅ bezeichnet. Ist das Ausgangssignal des UND-Glieds 26 gleich "0", ist der Stromfluß von der Leitung 31 über die Magnetspule 5 zu der Leitung 32 unterbrochen.

Ist in den Speicherzellen 10, 11, 12 und 13 jeweils der Wert "0" gespeichert, ist dem einen Eingang des UND-Glieds 25 von dem Optokoppler 14 der Wert "0" zugeführt. Der Ausgang des UND-Glieds 25 ist deshalb unabhängig von dem Wert des Ausgangssignals des NICHT-Glieds 27 ebenfalls "0". Wie oben beschrieben, ist in diesem Fall der Stromfluß von der Leitung 31 über die Magnetspule 6 zu der Leitung 32 unterbrochen. Auch dem mit dem Optokoppler 16 verbundenen Eingang des UND-Glieds 26 ist der Wert "0" zugeführt. Der Ausgang des UND-Glieds 26 ist deshalb unabhängig von dem Wert des Ausgangssignals des NICHT-Glieds 28 ebenfalls "0". Wie oben beschrieben, ist in diesem Fall der Stromfluß von der Leitung 31 über die Magnetspule 5 zu der Leitung 32 unterbrochen.

Ist in der Speicherzelle 10 der Wert "1" und in den Speicherzellen 11, 12 und 13 weiterhin der Wert "0" gespeichert, ändert sich das Ausgangssignal des UND-Glieds 26 nicht. Es behält den Wert "0" bei, da der in der Speicherzelle 12 gespeicherte Wert sich nicht geändert hat. Da das Ausgangssignal des Optokopplers 14 jetzt gleich "1" ist, ist das Ausgangssignal des UND-Glieds 25 gleich dem Ausgangssignal des NICHT-Glieds 27. Dem mit dem Ausgang des Optokopplers 15 verbundenen Eingang des UND-Glieds 23 ist der Wert "0" zugeführt. Dies bedeutet, daß das Ausgangssignal des UND-Glieds 23 unabhängig von dem Ausgangssignal des Pulsweitenmodulators 21 gleich "0" ist. Das Ausgangssignal des NICHT-Glieds 27 ist somit gleich "1". Da somit beide Eingangssignale des UND-Glieds 25 den Wert "1" besitzen, wird dem Schaltverstärker 33 ebenfalls der Wert "1" zugeführt, und der Schaltverstärker 33 schließt den Stromkreis von der Leitung 31 über die Magnetspule 6 zu der Leitung 32. Der über die Magnetspule 6 fließende Strom i₆ ergibt sich aus der Höhe der Spannung zwischen den Leitungen 31 und 32 dividiert durch den ohmschen Widerstand der Magnetspule 6. Dieser Strom wird im folgenden als i₆ₘₐₓ bezeichnet.

Ist sowohl in der Speicherzelle 10 als auch in der Speicherzelle 11 der Wert "1" gespeichert, während in den Speicherzellen 12 und 13 weiterhin der Wert "0" gespeichert ist, ändert sich das Ausgangssignal des UND-Glieds 26 nicht. Es behält den Wert "0" bei. Da das Ausgangssignal des Optokopplers 14 weiterhin gleich "1" ist, ist das Ausgangssignal des UND-Glieds 25 gleich dem Ausgangssignal des NICHT-Glieds 27. Da jetzt auch das Ausgangssignal des Optokopplers 15 gleich "1" ist, ist das Ausgangssignal des UND-Glieds 23 durch das Ausgangssignal des Pulsweitenmodulators 21 bestimmt. Das Ausgangssignal des NICHT-Glieds 27 ist immer dann gleich "0", wenn beide Eingangssignale des UND-Glieds 23 gleich "1" sind. Dies bedeutet, daß bei der hier betrachteten Beaufschlagung der Speicherzellen 10 bis 13 das Eingangssignal des Schaltverstärkers 30 immer dann gleich "0" ist, wenn das Ausgangssignal des Pulsweitenmodulators 21 gleich "1" ist. Damit über die Magnetspule 6 ein Strom f ließt, dessen zeitlicher Mittelwert z. B. gleich 70 % von i₆ₘₐₓ ist, wird das Tastverhältnis des Pulsweitenmodulators 21 so eingestellt, daß sein Ausgangssignal während 70 % einer Periodendauer gleich "0" und in den restlichen 30 % der Periodendauer gleich "1" ist.

Der an die Optokoppler 16 und 17 angeschlossene Teil der Verknüpfungsschaltung 20 ist wie der an die Optokoppler 14 und 15 angeschlossenen Teil der Verknüpfungsschaltung 20 aufgebaut. Die Verknüpfung der in den Speicherzellen 12 und 13 gespeicherten Werte erfolgt in der gleichen Weise wie die oben beschriebene Verknüpfung der in den Speicherzellen 10 und 11 gespeicherten Werte.

Ist in der Speicherzelle 10 der Wert "0" gespeichert, so ist das Ausgangssignal des UND-Glieds 25 unabhängig von dem in der Speicherzelle 11 gespeicherten Wert gleich "0". Ist zusätzlich in der Speicherzelle 12 der Wert "1" gespeichert, ist das Ausgangssignal des UND-Glieds 26 durch das Ausgangssignal des NICHT-Glieds 28 bestimmt, da dem UND-Glied 26 von dem Optokoppler 16 der Wert "1" zugeführt ist. Das Ausgangssignal des UND-Glieds 26 ist gleich "1", wenn in der Speicherzelle 13 der Wert "0" gespeichert ist. Solange dem Schaltverstärker 33 der Wert "1" zugeführt wird, schließt er den Stromkreis von der Leitung 31 über die Magnetspule 5 zu der Leitung 32. Der über die Magnetspule 5 fließende Strom i₅ ergibt sich aus der Höhe der Spannung zwischen den Leitungen 31 und 32 dividiert durch den ohmschen Widerstand der Magnetspule 5. Dieser Strom wird im folgenden als i₅ₘₐₓ bezeichnet. Ist sowohl in der Speicherzelle 12 als auch in der Speicherzelle 13 der Wert "1" gespeichert, ist das Ausgangssignal des UND-Glieds 26 durch das Ausgangssignal des Pulsweitenmodulators 22 bestimmt. Das Ausgangssignal des UND-Glieds 26 ist gleich "0", wenn das Ausgangssignal des Pulsweitenmodulators 22 gleich "1" ist. Das Ausgangssignal des UND-Glieds 26 ist gleich "1", wenn das Ausgangssignal des Pulsweitenmodulators 22 gleich "0" ist. Damit über die Magnetspule 5 ein Strom fließt, dessen zeitlicher Mittelwert z. B. gleich 70 % von i₅ₘₐₓ ist, wird das Tastverhältnis des Pulsweitenmodulators 22 so eingestellt, daß sein Ausgangssignal während 70 % einer Periodendauer gleich "0" und in den restlichen 30 % der Periodendauer gleich "1" ist.

Ist in der Speicherzelle 10 der Wert "1" und in der Speicherzelle 11 der Wert "0" gespeichert, fließt im eingeschwungenen Zustand über die Magnetspule 6 der Strom i₆ₘₐₓ. Dieser Strom wird mindestens so groß wie der Anzugsstrom der Magnetspule 6 gewählt. Ist zusätzlich zu dem Wert "1" in der Speicherzelle 10 auch in der Speicherzelle 11 der Wert "1" gespeichert, fließt über die Magnetspule 6 nur noch ein entsprechend dem Haltestrom verringerter Strom, dessen zeitlicher Mittelwert in diesem Beispiel 0,7 x i₆ₘₐₓ beträgt.

Ist in der Speicherzelle 12 der Wert "1" und in der Speicherzelle 13 der Wert "0" gespeichert, fließt im eingeschwungenen Zustand über die Magnetspule 5 der Strom i₅ₘₐₓ. Dieser Strom wird mindestens so groß wie der Anzugsstrom der Magnetspule 5 gewählt. Ist zusätzlich zu dem Wert "1" in der Speicherzelle 12 auch in der Speicherzelle 13 der Wert "1" gespeichert, fließt über die Magnetspule 6 nur noch ein entsprechend dem Haltestrom verringerter Strom, dessen zeitlicher Mittelwert in diesem Beispiel 0,7 x i₅ₘₐₓ beträgt.

Kann die Spannung zwischen den Leitungen 31 und 32 nach oben und nach unten von ihrem Nennwert abweichen, muß das Tastverhältnis der Pulsweitenmodulatoren 21 und 22 so eingestellt werden, daß auch bei der kleinsten zulässigen Spannung zwischen den Leitungen 31 und 32 der für das Halten des Magnetankers mindestens erforderliche Haltestrom noch fließt. Das bedeutet, daß der zeitliche Mittelwert der über die Magnetspulen fließenden Ströme in den meisten Fällen, wie z. B. bei Nennspannung, größer als der Haltestrom ist. Dies gilt erst recht für die größte zulässige Spannung zwischen den Leitungen 31 und 32.

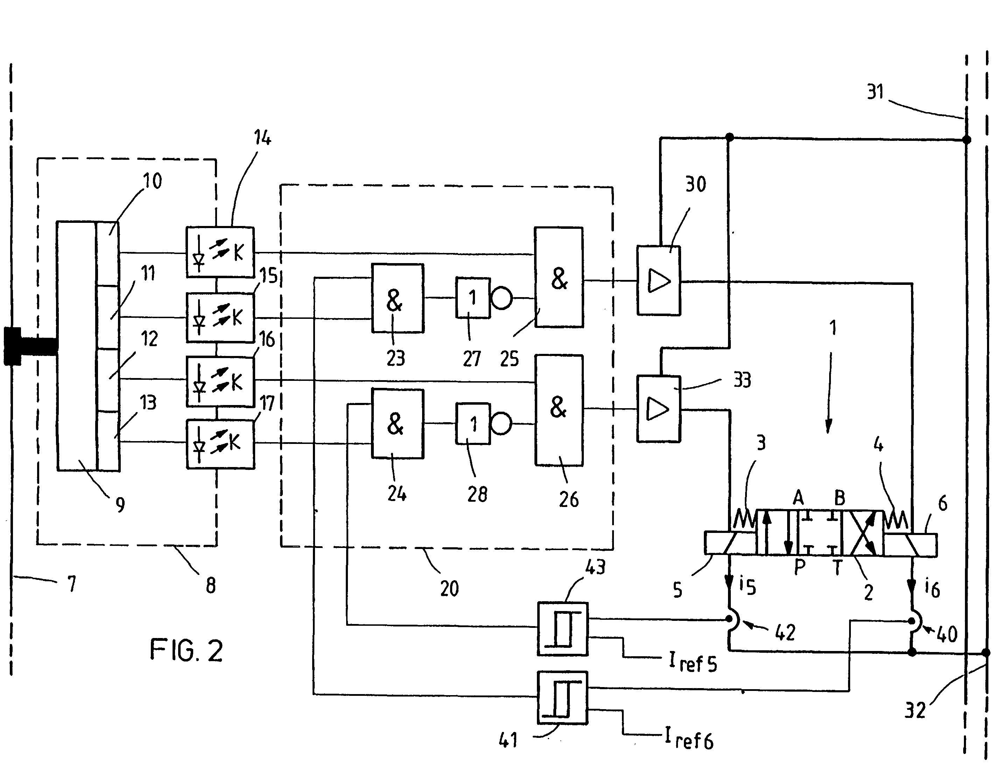

Die Figur 2 zeigt eine Ansteuerschaltung für ein elektromagnetisch betätigtes hydraulisches Schaltventil, bei der anstelle von Pulsweitenmodulatoren mit fest eingestelltem Tastverhältnis eine Stromregelung für den Haltestrom vorgesehen ist. Soweit in der Figur 2 die gleichen Bauteile wie in der Figur 1 verwendet werden, sind sie mit den gleichen Bezugszeichen versehen. Anstelle des Pulsweitenmodulators 21 ist eine Strommeßeinrichtung 40 und ein Komparator 41 vorgesehen. In gleicher Weise ist anstelle des Pulsweitenmodulators 22 eine Strommeßeinrichtung 42 und ein Komparator 43 vorgesehen.

Der Komparator 41 vergleicht den Augenblickswert des über die Magnetspule 6 fließenden Stroms mit einem Referenzwert I_{ref6}. Ist der Strom i₆ größer als der Referenzwert I_{ref6}, nimmt das Ausgangssignal des Komparators 41 den Wert "1" an. Dem Schaltverstärker 30 wird der Wert "0" zugeführt, bis der Strom i₆ kleiner als der Referenzwert I_{ref6} geworden ist. Ist der Strom i₆ kleiner als der Referenzwert I_{ref6}, nimmt das Ausgangssignal des Komparators 41 den Wert "0" an. Dem Schaltverstärker 30 wird jetzt der Wert "1" zugeführt, bis der Strom i₆ größer als der Referenzwert I_{ref6} geworden ist. Solange in den Speicherzellen 10 und 11 der Wert "0" gespeichert ist, bestimmt das Ausgangssignal des Komparators 41 das Ausgangssignal des UND-Glieds 25 und damit die Ansteuerung des Schaltverstärkers 30. Der zeitliche Mittelwert des über die Magnetspule 6 fließenden Stroms stellt sich dabei so ein, daß er gleich dem Referenzwert I_{ref6} ist.

In gleiche Weise vergleicht der Komparator 43 den Augenblickswert des über die Magnetspule 5 fließenden Stroms mit einem Referenzwert I_{ref5}. Ist der Strom i₅ größer als der Referenzwert I_{ref5}, nimmt das Ausgangssignal des Komparators 43 den Wert "1" an. Dem Schaltverstärker 33 wird der Wert "0" zugeführt, bis der Strom i₅ kleiner als der Referenzwert I_{ref5} geworden ist. Ist der Strom i₅ kleiner als der Referenzwert I_{ref5}, nimmt das Ausgangssignal des Komparators 43 den Wert "0" an. Dem Schaltverstärker 33 wird jetzt der Wert "1" zugeführt, bis der Strom i₅ größer als der Referenzwert I_{ref5} geworden ist. Solange in den Speicherzellen 12 und 13 der Wert "1" gespeichert ist, bestimmt das Ausgangssignal des Komparators 43 das Ausgangssignal des UND-Glieds 25 und damit die Ansteuerung des Schaltverstärkers 33. Der zeitliche Mittelwert des über die Magnetspule 5 fließenden Stroms stellt sich dabei so ein, daß er gleich dem Referenzwert I_{ref5} ist.

In der Figur 2 ist das Tastverhältnis, mit dem die Schaltverstärker 30 und 33 beaufschlagt werden, nicht konstant wie in der Figur 1, sondern stellt sich selbsttätig so ein, daß der zeitliche Mittelwert der über die Magnetspulen fließenden Ströme gleich den Referenzwerten ist.

Im Zusammenhang mit den Figuren 1 und 2 wurde nur der Fall betrachten, daß jeweils eine der beiden Magnetspulen mit Strom beaufschlagt wird. Selbstverständlich können bei Bedarf beide Magnetspulen gleichzeitig mit Strom beaufschlagt werden. Dabei ist es auch möglich, eine der beiden Magnetspulen mit einem gegenüber dem Maximalwert verringerten Strom zu beaufschlagen.

In den Figuren 1 und 2 wurde jeweils nur einer von mehreren Teilnehmern am Bus gezeigt. Auf die Darstellung der weiteren Teilnehmer wurde aus Platzgründen verzichtet.

Die galvanische Trennung durch die Optokoppler 14 bis 17 erlaubt es, die Signalverarbeitungsschaltung 8 aus dem Datenbus 7 zu versorgen, während die Verknüpfungsschaltung 20 aus der Spannung zwischen den Leitungen 31 und 32 versorgt wird.

Da über die Magnetspulen 5 oder 6 des Schaltventils nach dem Anziehen des Ankers nur noch der für einen sicheren Betrieb erforderliche Haltestrom fließt, wird bei einem Anschluß von mehreren Schaltventilen an ein Bussystem die Gesamtstromaufnahme wesentlich verringert. Auch wird eine unnötige Erwärmung der Magnetspulen vermieden, da nicht ständig der Anzugsstrom fließt.

## Patentansprüche

1. Verfahren zur Ansteuerung von einen Fluidstrom steuernden, elektrisch betätigten Schaltventilen über ein digitales Bussystem, bei dem in einem Datentelegramm mehr Nutzdatenbits übertragen werden als für den Schaltvorgang eines Schaltventils als solchen erforderlich sind, **dadurch gekennzeichnet, daß** über für den Schaltvorgang des Schaltventils als solchen nicht benötigte Nutzdatenbits des Bussystems zusätzliche Schaltbefehle übertragen werden und daß durch die zusätzlichen Schaltbefehle weitere Funktionen des Schaltventils gesteuert werden.

2. Verfahren nach Anspruch 1, **dadurch gekennzeichnet, daß** bei einem elektromagnetisch betätigten Schaltventil (1) der über die Magnetspule (5; 6) des Schaltventils (1) fließende Strom (i₅; i₆) durch den zusätzlichen Schaltbefehl zwischen zwei Werten umgeschaltet wird.

3. Verfahren nach Anspruch 2, **dadurch gekennzeichnet, daß** der zeitliche Mittelwert des über die Magnetspule (5; 6) des Schaltventils (1) fließenden Stroms (i₅; i₆) durch den zusätzlichen Schaltbefehl geändert wird.

4. Verfahren nach Anspruch 3, **dadurch gekennzeichnet, daß** das Tastverhältnis eines über die Magnetspule (5; 6) des Schaltventils (1) fließenden pulsweitenmodulierten Stroms durch den zusätzlichen Schaltbefehl geändert wird.

## Claims

1. A method for commanding electrically operated switch valves controlling a fluid flow via a digital bus system wherein more useful data bits are transmitted in a data telegram than are required for the switching operation of a switch valve as such, **characterized in that** additional switching commands are transmitted via the useful data bits of the bus system not required for the switching operation of the switch valve as such and that the additional switching commands control further functions of the switch valve.

2. A method according to claim 1, **characterized in that,** in an electromagnetically operated switch valve (1), the additional switching command causes the current (i₅; i₆) flowing through the solenoid coil (5; 6) of the switch valve (1) to alternate between two values.

3. A method according to claim 2, **characterized in that** the additional switching command varies the mean time value of the current (i₅; i₆) flowing through the solenoid coil (5; 6) of the switch valve (1).

4. A method according to claim 3, **characterized in that** the additional switching command varies the pulse-to-pause ratio of a pulse width modulated current flowing through the solenoid coil (5; 6) of the switch valve (1).

## Revendications

1. Un processus pour la commande de valves de commutation, qui commandent un flux de fluide et qui sont actionnées par voie électrique, au travers d'un système de bus digital, pour lequel un télégramme de données transmet plus de bits de données utiles que nécessaire à la procédure de commutation d'une valve de commutation en tant que telle, **caractérisé en ce que** des bits de données utiles du système de bus, qui ne sont pas nécessaires à la procédure de commutation d'une valve de commutation en tant que telle, transmettent des commandes de commutation supplémentaires et que les commandes de commutation supplémentaires commandent d'autres fonctions de la valve de commutation.

2. Un processus selon la revendication n° 1, **caractérisé en ce que,** pour une valve (1) de commutation à actionnement électromagnétique, la commande de commutation supplémentaire fait commuter le courant (i₅ ; i₆), qui passe par la bobine (5 ; 6) excitatrice de la valve (1) de commutation, entre deux valeurs.

3. Un processus selon la revendication n° 2, **caractérisé en ce que** la commande de commutation supplémentaire fait varier la moyenne dans le temps du courant (i₅ ; i₆), qui passe par la bobine (5 ; 6) excitatrice de la valve (1) de commutation.

4. Un processus selon la revendication n° 3, **caractérisé en ce que** la commande de commutation supplémentaire fait varier le rapport entre la durée de passage pendant le cycle d'un courant à modulation de la taille des pulsations, qui passe par la bobine (5 ; 6) excitatrice de la valve (1) de commutation, et la durée de cycle.
